# EUROPEAN PATENT APPLICATION

(11) **EP 2 562 224 A1**
(43) Date of publication of application: **27.02.2013**
(21) Application number: 11838125.0
(22) Date of filing: 16.02.2011
(51) Int. Cl.: C09D 195/00, C09D 117/00, C09D 7/12, C09D 5/00

(54) **ONE-PACK TYPE UNHARDENING ADHESIVE FILM WATERPROOFING MATERIAL USING WASTE RUBBER AND METHOD FOR MANUFACTURING SAME**

(30) Priority: 04.11.2010 KR 20100109192
(71) Applicant: Renew System Co. Ltd, Seoul 121-835 (KR)
(72) Inventor: LEE, Sang Keun, Namyangju-si Seoul 472-872 (KR); LEE, Jong Yong, Seoul 120-012 (KR); CHO, Il Kyu, Yeoju-gun Gyeonggi-do 469-856 (KR)
(74) Representative: Adam, Holger
(86) International application number: PCT/KR2011/001021
(87) International publication number: WO 2012/060520

(57) **Abstract**

Disclosed therein is a non-curing one-component adhesive waterproof material using scrap rubber and a preparation method thereof in which scrap rubber is mixed with oil, heated and pulverized into size-reduced rubber under mechanical shear stress, and more particularly, to a non-curing one-component adhesive waterproof material using scrap rubber and a preparation method thereof in which scrap rubber is heated to have a reduced elasticity, pulverized into size-reduced rubber under mechanical shear stress, and then mixed with emulsified asphalt, styrene butadiene rubber (SBR), and natural rubber (NR).

The present invention includes: 10 to 15 parts by weight of scrap rubber chips; 20 to 25 parts by weight of oil, the scrap rubber chips and the oil being mixed together, heated at 200 to 230 °C and then subjected to size reduction under mechanical shear stress to pulverize the scrap rubber chips into size-reduced rubber; and 29.6 to 40 parts by weight of emulsified asphalt being mixed with the size-reduced rubber. The mixture of the emulsified asphalt and the size-reduced rubber is mixed with 8 to 13 parts by weight of a filler, 1 to 2 parts by weight of a surfactant, and 0.1 to 0.4 part by weight of an anti-ageing agent at a temperature of 90 to 100 °C, and then further mixed with 3 to 6 parts by weight of SBR and 5 to 9 parts by weight of NR for viscosity control.

## Description

### TECHNICAL FIELD

The present invention relates to a non-curing one-component adhesive waterproof material using scrap rubber and a preparation method thereof in which scrap rubber is mixed with oil, heated and pulverized into size-reduced rubber under mechanical shear stress, and more particularly, to a non-curing one-component adhesive waterproof material using scrap rubber and a preparation method thereof in which scrap rubber is heated to have a reduced elasticity, pulverized into size-reduced rubber under mechanical shear stress, and then mixed with emulsified asphalt, styrene butadiene rubber (SBR), and natural rubber (NR).

### BACKGROUND ART

Generally, the vehicle tires that are no longer suitable for use on vehicles are to be replaced with new ones for use safety. A recent expansion of the business that involves processing the used tires into waste tire chips for recycling purpose has created a demand for industrial products related to the waste tire chips and hence an increasing market demand for waste tire chips, which has brought about a rapid expansion of the workers and industries dealing with the waste tire chips.

In regard to the uses of waste tires, Korean Patent Application No. 10-1996-0038641 discloses a method of preparing an asphalt concrete using waste tires, where the residual substance in the process of recycling/circulating oil and gas generated as a pyrolysis product of waste tires and refined oil is mixed with asphalt and aggregate to form an asphalt concrete. In this preparation method, the residual substance is put to a 200-mesh sieve to sort out asphalt and residual powder, where the mixing ratio (= residual/(asphalt + residual)× 100) is 15 or less. The residual powder and the asphalt are weighed so that the asphalt concrete contains less than 105 wt.% of the binder (i.e., asphalt plus residual) with respect to the total weight of the asphalt in the asphalt concrete not containing the residual, and then dried out in a drier by heat at 100 °C, and 150 °C. The dry residual and asphalt are then mixed with aggregate in a pug mill of an asphalt mixing plant to prepare an asphalt concrete containing a residual from pyrolysis of waste tires and refined oil.

Korean Patent Application No. 10-1998-0051059 describes a block that includes a top elastic layer containing 100 parts by weight of rubber chips, 3 to 10 parts by weight of a polyurethane binder, and 0.5 to 5 parts by weight of a pigment, and a bottom support layer containing 100 parts by weight of sand, 5 to 20 parts by weight of rubber, and 10 to 15 parts by weight of a polyurethane binder.

However, the aforementioned methods involve only processing waste tires and mixing the processed waste tires with a defined product to form another product and thus cannot be applied to products with a variety of features.

### DISCLOSURE OF INVENTION

### TECHNICAL PROBLEM

Accordingly, it is an object of the present invention to provide a non-curing one-component adhesive waterproof material using scrap rubber and a preparation method thereof in which scrap rubber is heated to have a reduced elasticity, pulverized into size-reduced rubber under mechanical shear stress, and then mixed with emulsified asphalt, styrene butadiene rubber (SBR), and natural rubber (NR).

### TECHNICAL SOLUTION

To accomplish the above object, according to the present invention, there is provided a non-curing one-component adhesive waterproof material using scrap rubber that includes: 10 to 15 parts by weight of scrap rubber chips; 20 to 25 parts by weight of oil, the scrap rubber chips and the oil being mixed together, heated at 200 to 230 °C and then subjected to size reduction under mechanical shear stress to pulverize the scrap rubber chips into size-reduced rubber; and 29.6 to 40 parts by weight of emulsified asphalt being mixed with the size-reduced rubber, where the mixture of the emulsified asphalt and the size-reduced rubber is mixed with 8 to 13 parts by weight of a filler, 1 to 2 parts by weight of a surfactant, and 0.1 to 0.4 part by weight of an anti-ageing agent at a temperature of 90 to 100 °C, and then mixed with 3 to 6 parts by weight of SBR and 5 to 9 parts by weight of NR for viscosity control.

In another aspect of the present invention, there is provided a method for preparing a non-curing one-component adhesive waterproof material using scrap rubber that includes: (a) size-reducing scrap rubber into rubber chips under mechanical shear stress, adding oil to the scrap rubber chips 4 to 5 mm in diameter and free from foreign material, heating the mixture of the scrap rubber chips and the oil at 200 to 230 °C to reduce elasticity of the scrap rubber chips, and pulverizing the rubber chips to be 0.01 to 0.1 mm in diameter through a mechanical milling device to prepare a liquid scrap rubber pulverized thermally and mechanically and having a viscosity of 10,000 to 30,000 cPs; (b) mixing the liquid rubber heated at 200 to 230 °C with an emulsified asphalt, and adding a filler, a surfactant, and an anti-ageing agent to the mixture of the liquid rubber and the emulsified asphalt at 90 to 100 °C ; and (c) adding SBR to provide rubber elasticity and increase the viscosity of the resultant mixture in the range of 300,000 to 600,000 cPs through a bonding between the SBR and the emulsified asphalt, and further adding NR to increase the viscosity of the resultant mixture up to 2,000,000 to 5,000,000 cPs.

In the step (b), the asphalt is an emulsified asphalt containing water and asphalt at a mixing ratio of 1:1 with an emulsifier and remains in the liquid state at the room temperature. The filler is an inorganic powder selected from talc, calcium carbonate, clay, or bentonite. The surfactant is at least one selected from anionic surfactant, cationic surfactant, amphoteric surfactant, nonionic surfactant, or polyoxyethylene nonionic surfactant.

### ADVANTAGEOUS EFFECTS

According to the present invention, the waterproof material contains scrap rubber size-reduced and pyrolyzed to increase the viscosity of the liquid rubber up to 10,000 to 30,000 cPs from the viscosity of oil of about 250 to 1000 cPs, and further uses SBR and NR to provide rubber elasticity for making the waterproof material adjusted to the movement of a concrete building structure, where the viscosity can be controlled according to the added amounts of SBR and NR in consideration of workability.

The present invention maximizes the use of scrap rubber produced as a composite material necessary to a variety of industrial/constructional products to minimize the waste of resources and remarkably decrease air pollution occurring in processing scrap rubber, reduces disposal costs, decreases the quantity of expensive imported rubber such as SBR or NR, and provides a novel non-curing one-component waterproof material causing neither fracture nor lift-up of the waterproof layer.

### BEST MODE FOR CARRYING OUT THE INVENTION

The present invention includes: 10 to 15 parts by weight of scrap rubber chips; 20 to 25 parts by weight of oil, the scrap rubber chips and the oil being mixed together, heated at 200 to 230 °C and then subjected to size reduction under mechanical shear stress to pulverize the scrap rubber chips into size-reduced rubber; and 29.6 to 40 parts by weight of emulsified asphalt being mixed with the size-reduced rubber. The mixture of the emulsified asphalt and the size-reduced rubber is mixed with 8 to 13 parts by weight of a filler, 1 to 2 parts by weight of a surfactant, and 0.1 to 0.4 part by weight of an anti-ageing agent at a temperature of 90 to 100 °C, and then further mixed with 3 to 6 parts by weight of SBR and 5 to 9 parts by weight of NR for viscosity control.

The present invention also includes: (a) size-reducing scrap rubber into rubber chips under mechanical shear stress, adding oil to the scrap rubber chips 4 to 5 mm in diameter and free from foreign material, heating the mixture of the scrap rubber chips and the oil at 200 to 230 °C to reduce elasticity of the scrap rubber chips, and pulverizing the rubber chips to be 0.01 to 0.1 mm in diameter through a mechanical milling device to prepare a liquid scrap rubber pulverized thermally and mechanically and having a viscosity of 10,000 to 30,000 cPs; (b) mixing the liquid rubber heated at 200 to 230 °C with an emulsified asphalt, and adding a filler, a surfactant, and an anti-ageing agent to the mixture of the liquid rubber and the emulsified asphalt at 90 to 100 °C ; and (c) adding SBR to provide rubber elasticity and increase the viscosity of the resultant mixture in the range of 300,000 to 600,000 cPs through a bonding between the SBR and the emulsified asphalt, and further adding NR to increase the viscosity of the resultant mixture up to 2,000,000 to 5,000,000 cPs.

The non-curing one-component adhesive waterproof material using scrap rubber according to the present invention contains 10 to 15 parts by weight of scrap rubber chips; 20 to 25 parts by weight of oil, where the scrap rubber chips and the oil are mixed together, heated at 200 to 230 °C and then subjected to size reduction under mechanical shear stress to pulverize the scrap rubber chips into size-reduced rubber; and 29.6 to 40 parts by weight of emulsified asphalt which is mixed with the size-reduced rubber. The mixture of the emulsified asphalt and the size-reduced rubber is mixed with 8 to 13 parts by weight of a filler, 1 to 2 parts by weight of a surfactant, and 0.1 to 0.4 part by weight of an anti-ageing agent at a temperature of 90 to 100 °C, and then further mixed with 3 to 6 parts by weight of SBR and 5 to 9 parts by weight of NR for viscosity control.

The scrap rubber chips include waste tires, waste EPM (Ethylene Propylene Diene Monomer), or rubber gloves, and may be any rubber product that is ready to become crumbly by heat with a deterioration of rubber elasticity and cut into pieces under mechanical shear stress.

More specifically, the non-curing one-component adhesive waterproof material using scrap rubber according to one embodiment of the present invention is prepared from a mixture of oil and scrap rubber chips about 4 to 5 mm in diameter and free from foreign material, which mixture is heated up to 200 to 230 °C, fed in the axial direction of the stator/rotor of a wet pulverizer, accelerated by centrifugal force and then size-reduced under shear stress imposed on the gap between the stator and the rotor to prepare size-reduced rubber about 0.01 to 0.1 mm in diameter. The liquid scrap rubber thus obtained is controlled in regard to viscosity in the range of about 10,000 to 30,000 cPs and mixed with 29.6 to 40 parts by weight of an emulsified asphalt while heated at 200 to 230 °C. Kept at a constant temperature of 90 to 100 °C, the mixture of the liquid scrap rubber and the emulsified asphalt is blended with 8 to 13 parts by weight of a filler, 1 to 2 parts by weight of a surfactant, and 0.1 to 0.4 part by weight of an anti-ageing agent, and then further mixed with 3 to 6 parts by weight of SBR and 5 to 9 parts by weight of NR for viscosity control.

The content of the emulsified asphalt, the filler, or the surfactant greater than the above-defined ranges makes the material crumbly and difficult to agitate, while the content less than the above-defined ranges results in an excessively low viscosity of the material, requiring a larger quantity of SBR and NR with poor economy efficiency, and lowers the specific gravity of the material to make the material product not suitable as a waterproof material.

The SBR contributes to modification of asphalt to inhibit deoiling and enhance the viscosity. Using 3 to 6 parts by weight of the SBR results in an increased viscosity of the material up to 300,000 to 600,000 cPs. The SBR content greater than 6 parts by weight does not affect the viscosity, while the SBR content less than 3 parts by weight results in an excessively low viscosity due to non-modified asphalt, requiring a greater quantity of NR.

The NR is used to provide the one-component material with fluidity and rubber elasticity. Using 5 to 9 parts by weight of the NR increases the viscosity of the material up to 2,000,000 to 5,000,000 cPs. The NR content greater than 9 parts by weight raises the viscosity too much to conduct a mixing in the reactor with a deterioration of workability, while the NR content less than 5 parts by weight lowers the viscosity to prevent dripping at the room temperature but causes a dripping of the material upon a long-term exposure at 60 °C.

The asphalt includes straight asphalt, blown asphalt, cut-back asphalt, emulsified asphalt, etc. Among these, emulsified asphalt which is in the liquid state at the room temperature is preferred, because the others, such as straight asphalt, blown asphalt, or cut-back asphalt, are solid at the room temperature or have an excessively high viscosity so that they need to be heated for better mixing.

The filler is an inorganic powder, including talc, calcium carbonate, clay, or bentonite. The surfactant includes at least one selected from anionic surfactant, cationic surfactant, amphoteric surfactant, nonionic surfactant, or polyoxyethylene nonionic surfactant.

Hereinafter, a detailed description will be given as to a method for preparing a non-curing one-component adhesive waterproof material using scrap rubber according to the embodiment of the present invention.

The method for preparing a non-curing one-component adhesive waterproof material using scrap rubber according to the present invention comprises (a) reducing the elasticity of scrap rubber chips and then pulverizing the scrap rubber chips through a mechanical mulling device; (b) mixing the liquid scrap rubber with an emulsified asphalt; and (c) adjusting viscosity and providing the resultant product with rubber elasticity.

The step (a) includes mixing scrap rubber chips 4 to 5 mm in diameter with oil, heating the mixture at 200 to 230 °C to reduce the elasticity of the rubber chips, and then pulverizing the rubber chips to a diameter of 0.01 to 0.1 mm through a mechanical milling device, thereby preparing liquid scrap rubber thermally/mechanically pulverized and controlled to have a viscosity of 10,000 to 30,000 cPs.

The scrap rubber chips used in the step (a) should be size-reduced under mechanical shear stress and free from foreign materials.

In other words, the scrap rubber chips used in the step (a), which include EPDM, tires, rubber gloves, etc., may be preferably scrap rubber free from foreign materials such as metal, wood, fabrics, etc. to achieve size reduction, and more preferably, waste EPDM rubber such as vehicle packing not requiring a separate pretreatment rather than tires or rubber gloves.

The step (b) is mixing the emulsified asphalt and the liquid scrap rubber. The liquid scrap rubber heated at 200 to 230 °C is mixed with the emulsified asphalt, and then further mixed with a filler, a surfactant, and an anti-ageing agent while heated at 90 to 100 °C.

In the step (b) of mixing the emulsified asphalt with the filler, the surfactant, and the anti-ageing agent, the emulsified asphalt contains water and asphalt at a mixing ratio of 1:1 with an emulsifier and remains in the liquid state at the room temperature. The filler is an inorganic powder, including talc, calcium carbonate, clay, or bentonite. The surfactant includes at least one selected from anionic surfactant, cationic surfactant, amphoteric surfactant, nonionic surfactant, or polyoxyethylene nonionic surfactant.

As the other ingredients than the emulsified asphalt are all solid at the room temperature, a separate heating step is needed to conduct the mixing. The emulsified asphalt is preferred, because it can be mixed with the liquid scrap rubber and cooled down to 90 to 100 °C.

The step (c) includes adding SBR and NR to control the viscosity and provide rubber elasticity to the final product. The SBR is bonded to the emulsified asphalt to increase the viscosity of the material up to 300,000 to 600,000 cPs, and the NR is added to further increase the viscosity to 2,000,000 to 5,000,000 cPs.

In the step (c), SBR and NR are used to increase the viscosity of the materials prepared in the steps (a) and (b) and provide rubber elasticity. The SBR bonds to asphalt to raise the viscosity of the material up to 300,000 to 600,000 cPs, but increasing the added amount of SBR does not result in another increase in the viscosity of the material but makes the material in the form of liquid rather than gel, causing a dripping of the waterproof material.

The addition of NR for keeping the waterproof material from dripping increases the viscosity of the material up to 2,000,000 to 5,000,000 cPs. The viscosity rises with an increase in the added amount of NR and may be controlled in consideration of the workability.

In carrying out a construction work with the non-curing one-component adhesive waterproof material, the material is generally difficult to dispense due to high viscosity. Hence, a rotor-stator pump can be used to dispense the high-viscosity material, so that the frictional heat generated from the dispenser machine or the dispenser hose warms the material up to about 60 °C and increases the viscosity of the material to about 150,000 to 250,000 cPs to make the material capable of being coated through rollers and cooled down to take on its shape with restored high viscosity.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

### INDUSTRIAL APPLICABILITY

The material prepared according to the present invention uses scrap rubber size-reduced to cause pyrolysis and raise the viscosity of the liquid rubber from about the level of oil, 250 to 1000 cPs, up to 10,000 to 30,000 cPs, and contains SBR and NR to provide rubber elasticity for adjustment to the movement of a concrete building structure. The viscosity may be controlled according to the added amount of SBR and NR in consideration of workability. The present invention maximizes the use of scrap rubber produced as a composite material necessary to a variety of industrial/constructional products to minimize the waste of resources and remarkably decrease air pollution occurring in processing scrap rubber, reduces disposal costs, decreases the quantity of expensive imported rubber such as SBR or NR, and provides a novel non-curing one-component waterproof material causing neither fracture nor lift-up of the waterproof layer.

## Claims

1. A non-curing one-component adhesive waterproof material using scrap rubber, comprising:
10 to 15 parts by weight of scrap rubber chips;
20 to 25 parts by weight of oil, the scrap rubber chips and the oil being mixed together, heated at 200 to 230 °C and then subjected to size reduction under mechanical shear stress to pulverize the scrap rubber chips into size-reduced rubber; and
29.6 to 40 parts by weight of emulsified asphalt being mixed with the size-reduced rubber,
the mixture of the emulsified asphalt and the size-reduced rubber being mixed with 8 to 13 parts by weight of a filler, 1 to 2 parts by weight of a surfactant, and 0.1 to 0.4 part by weight of an anti-ageing agent at a temperature of 90 to 100 °C, and then mixed with 3 to 6 parts by weight of SBR and 5 to 9 parts by weight of NR for viscosity control.

2. A method for preparing a non-curing one-component adhesive waterproof material using scrap rubber, comprising:
(a) size-reducing scrap rubber into rubber chips under mechanical shear stress, adding oil to the scrap rubber chips 4 to 5 mm in diameter and free from foreign material, heating the mixture of the scrap rubber chips and the oil at 200 to 230 °C to reduce elasticity of the scrap rubber chips, and pulverizing the rubber chips to be 0.01 to 0.1 mm in diameter through a mechanical milling device to prepare a liquid scrap rubber pulverized thermally and mechanically and having a viscosity of 10,000 to 30,000 cPs;
(b) mixing the liquid rubber heated at 200 to 230 °C with an emulsified asphalt, and adding a filler, a surfactant, and an anti-ageing agent to the mixture of the liquid rubber and the emulsified asphalt at 90 to 100 °C ; and
(c) adding SBR to provide rubber elasticity and increase the viscosity of the resultant mixture in the range of 300,000 to 600,000 cPs through a bonding between the SBR and the emulsified asphalt, and further adding NR to increase the viscosity of the resultant mixture up to 2,000,000 to 5,000,000 cPs.

3. The method as claimed in claim 2, wherein the step (b) using the asphalt being an emulsified asphalt containing water and asphalt at a mixing ratio of 1:1 with an emulsifier,
the filler being an inorganic powder selected from talc, calcium carbonate, clay, or bentonite,
the surfactant being at least one selected from anionic surfactant, cationic surfactant, amphoteric surfactant, nonionic surfactant, or polyoxyethylene nonionic surfactant.
